# EUROPEAN PATENT SPECIFICATION

(11) **EP 2 805 041 B1**
(45) Date of publication and mention of the grant of the patent: **08.06.2016**
(21) Application number: 13704815.3
(22) Date of filing: 08.01.2013
(51) Int. Cl.: F02M 45/08, F02M 63/00, F02M 21/02, F02D 19/06, F02D 19/10

(54) **FUEL INJECTION SYSTEM**
KRAFTSTOFFEINSPRITZSYSTEM
SYSTÈME D'INJECTION DE CARBURANT

(30) Priority: 19.01.2012 FI 20125062
(43) Date of publication of application: 26.11.2014
(73) Proprietor: Wärtsilä Finland Oy, 65380 Vaasa (FI)
(72) Inventor: WINTERSTELLER, Anton, I-34018 Trieste (IT); ZUANIGH, Luca, I-34018 Trieste (IT); TROBERG, Mikael, I-34018 Trieste (IT)
(74) Representative: Berggren Oy Ab
(86) International application number: PCT/FI2013/050015
(87) International publication number: WO 2013/107926

(56) References cited:
- WO-A1-2005/026527
- DE-A1- 4 115 478
- DE-A1- 10 040 738
- US-A- 4 356 976

## Description

The invention relates to a fuel injection system for a reciprocating engine.

In large reciprocating engines, such as those used in ships or at power plants, smoke formation at low loads is a common problem. The fuel injectors of the engines must be capable of delivering the fuel amount needed for the operation at maximum load. Since large internal combustion engines need to run reliably and efficiently at maximum or near maximum power, the injectors are usually optimized for high loads. This can mean that at low loads the injectors do not work optimally and smoke is formed. If the injector performance at low loads is improved, this usually leads to higher fuel consumption at high loads.

WO 2005/026527 A1 shows a fuel injection system comprising a high pressure fuel pump, a pressure accumulator for receiving fuel from the high pressure fuel pump, a first and a second fuel injection valves, a drain line and a control valve.

The control valve has a first position, where flow communication between the pressure accumulator and the fuel injection unit is open and flow communication between the drain line and the fuel injection unit is closed. The control valve has a second position, where flow communication between the drain line and the fuel injection unit is open and flow communication between the pressure accumulator and the fuel injection unit is closed.

An object of the present invention is to provide an improved fuel injection system for a reciprocating engine.

According to the invention, this object can be achieved by a fuel injection system according to claim 1. The fuel injection system according to the invention comprises a high pressure fuel pump and a fuel injection unit for each cylinder of the engine. The fuel injection unit comprises a first fuel injection valve and a second fuel injection valve for injecting fuel into the cylinder, a pressure accumulator for receiving fuel from the high pressure fuel pump, and a drain line. The fuel injection unit is provided with a switch valve and a control valve, which are arranged in flow communication with each other. The switch valve has a first position, where flow communication between the control valve and the first injection valve is open and flow communication between the control valve and the second injection valve is closed, and a second position, where flow communication between the control valve and the second fuel injection valve is open and flow communication between the control valve and the first fuel injection valve is closed. The control valve has a first position, where flow communication between the pressure accumulator and the switch valve is open and flow communication between the drain line and the switch valve is closed, and a second position, where flow communication between the drain line and the switch valve is open and flow communication between the pressure accumulator and the switch valve is closed.

With the fuel injection system in accordance with the invention, a suitable fuel injection nozzle can be chosen for different operating conditions of the engine. As a result, the fuel consumption of the engine can be reduced and at the same time it is possible to achieve lower NOx, CO and hydrocarbon emissions and lower smoke formation. Additionally, the fuel injection system according to the invention provides a wide flexibility to control the injection timing over the whole operating range of the engine. By fast and flexible control of the injection timing, an accurate fuel injection rate shaping and low emission level and fuel consumption requirements can be achieved with very low impact on the injection system design, engine automation and cost.

In the following the invention will be described by way of an example with reference to the accompanying drawings, in which
Fig. 1 shows schematically a fuel injection system according to an embodiment of the present invention, and
Fig. 2 shows schematically a fuel injection system according to another embodiment of the present invention.

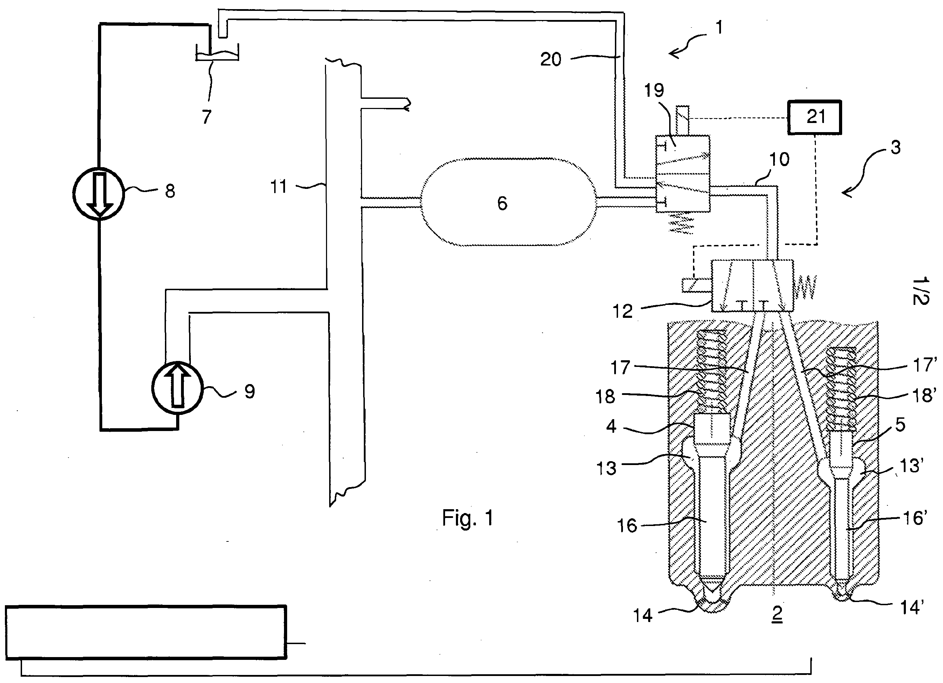

Fig. 1 discloses a fuel injection system 1 for a reciprocating engine having several cylinders 2. The reciprocating engine can be a large diesel engine. Large reciprocating engine refers here to such engines that can be used for instance as main and auxiliary engines in ships or in power plants for production of heat and/or electricity. The engine can be solely operated by liquid fuel, such as heavy fuel oil or diesel. Alternatively, the engine can be a so called dual fuel engine that can also be operated by gaseous fuel, such as natural gas. When the engine is operated by gas, a small amount of liquid fuel is utilized as a pilot fuel. The gas is injected into the engine cylinder after the pilot fuel and is ignited by the flame from the pilot fuel injection.

The fuel injection system 1 comprises a fuel source, such as a fuel tank 7, a low pressure fuel pump 8 and a high pressure fuel pump 9. The fuel injection system 1 further comprises a separate fuel injection unit 3 for each cylinder 2. The fuel injection unit 3 comprises a first fuel injection valve 4 and a second fuel injection valve 5 for injecting fuel into the cylinder 2. The fuel injection capacity of the first fuel injection valve 4 is greater than the fuel injection capacity of the second fuel injection valve 5. The first fuel injection valve 4 can thus be used for injecting large amounts of fuel and the second fuel injection valve 5 can be used for injecting smaller amounts of fuel. For instance, the first fuel injection valve 4 can be used when the engine load is over a predetermined load level, e.g. over 30 percent of the maximum load, and the second fuel injection valve 5 can be used for lower engine loads. Additionally, different fuel injection valves 4, 5 can be used for pre-injection, main injection and post-injection. For example, the second fuel injection valve 5 can be used for the pre-injection and/or the post-injection and the first fuel injection valve 4 for the main injection. In the dual fuel engine the first injection valve 4 can be used for the injection of the liquid pilot fuel. The fuel injection unit 3 can be installed into the cylinder head of the engine.

The fuel injection unit 3 comprises a pressure accumulator 6 for receiving fuel from the high pressure pump 9. The pressure accumulator 6 also stores fuel that is pressurized by the high pressure pump 9. Additionally, the pressure accumulator 6 dampens fuel pressure pulses in the fuel injection system 1. The pressure accumulator 6 can be installed into the cylinder head of the engine. The high pressure pump 9 is connected to the pressure accumulators 6 of the fuel injection units 3 by means of a high pressure piping 11.

The fuel injection unit 3 comprises a fuel line 10 that extends from the pressure accumulator 6 toward the fuel injection valves 4, 5. The fuel injection system 1 further comprises a drain line 20, which is in flow communication with the fuel tank 7. The fuel pressure in the drain line 20 and the fuel tank 7 is lower than that in the pressure accumulator 6.

The first fuel injection valve 4 comprises a first fuel chamber 13 for storing fuel before injection, a first injection nozzle 14 and a first injector needle 16 for opening and closing flow communication between the first fuel chamber 13 and the first injection nozzle 14. The first fuel injection valve 4 is also provided with a first feed line 17, through which fuel can fed into the first fuel chamber 13. The first fuel injection valve 4 comprises a first spring 18, which urges the first injector needle 16 toward a closed position. Force caused by fuel pressure in the first fuel chamber 13 urges the first injector needle 16 toward an open position.

Correspondingly, the second fuel injection valve 5 comprises a second fuel chamber 13' for storing fuel before injection, a second injection nozzle 14' and a second injector needle 16' for opening and closing flow communication between the second fuel chamber 13' and the second injection nozzle 14'. The second fuel injection valve 5 is provided with a second feed line 17', through which fuel can be fed into the second fuel chamber 13'. The second fuel injection valve 5 comprises a second spring 18', which urges the second injector needle 16' toward a closed position. Force caused by fuel pressure in the second fuel chamber 13' urges the second injector needle 16' toward an open position,

For choosing through which of the fuel injection valves 4, 5 the fuel is injected into the cylinder 2, the fuel injection unit 3 is provided with a switch valve 12. For adjusting the fuel injection timing and/or duration, the fuel injection unit 3 is provided with a control valve 19, which is in flow communication with the switch valve 12. The switch valve 12 and the control valve 19 are installed so that fuel discharged from the pressure accumulator 6 flows first through the switch valve 12 and thereafter through the control valve 19.

The switch valve 12 has a first position, where flow communication between the control valve 19 and the first injection valve 4 is open and flow communication between the control valve 19 and the second injection valve 5 is closed. Additionally, the switch valve 12 has a second position, where flow communication between the control valve 19 and the second fuel injection valve 5 is open and flow communication between the control valve 19 and the first fuel injection valve 4 is closed. In the drawing the switch valve 12 is shown in its second position.

The control valve 19 has a first position, where flow communication between the pressure accumulator 6 and the switch valve 12 is open and flow communication between the drain line 20 and the switch valve 12 closed. Additionally, the control valve 19 has a second position, where flow communication between the drain line 20 and the switch valve 12 is open and flow communication between the pressure accumulator 6 and the switch valve 12 is closed. In the drawing the control valve 19 is shown in its second position.

For selecting the valve position, the switch valve 12 and the control valve 19 are provided with actuators. In the embodiment of the drawing, the actuators are electro mechanic actuators. However, also other types of actuators can be used, for instance mechanic or hydraulic actuators.

The switch valve 12 is a 3/2 valve having three ports and two positions. The first port of the switch valve 12 is in flow communication with the first fuel injection valve 4, the second port with the second fuel injection valve 5 and the third port with the control valve 19 (third port of the control valve 19).

Also the control valve 19 is a 3/2 valve having three ports and two positions. The first port of the control valve 19 is in flow communication with the drain line 20, the second port with the pressure accumulator 6 and the third port with the switch valve 12 (third port of the switch valve 12).

When the engine is running, fuel is pumped from the fuel tank 7 by means of a low pressure pump 8 into a high pressure pump 9. The high pressure pump 9 elevates the fuel pressure to a level that a sufficient injection pressure may be obtained. From the high pressure pump 9 fuel flows through the high pressure piping 11 into the pressure accumulator 6 of each fuel injection unit 3.

To initiate the fuel injection, the control valve 19 is moved to the first position, where the control valve 19 opens flow communication between the pressure accumulator 6 and the switch valve 12. Depending on the position of the switch valve 12, fuel can flow from through the switch valve 12 either into the first injection valve 4 or the second injection valve 5.

In the first position of the switch valve 12, fuel flow via the switch valve 12 and the first feed line 17 into the first fuel chamber 13 is allowed. Fuel pressure in the first fuel chamber 13 increases, and when the pressure in the first fuel chamber 13 is high enough, force caused by the fuel pressure urges the first injector needle 16 toward an open position against the force of the first spring 18. The first injector needle 16 is lifted from its seat and the fuel is injected through first injection nozzle 14 into the cylinder 2.

In the second position of the switch valve 12, fuel flow via the switch valve 12 and the second feed line 17' into the second fuel chamber 13' is allowed. Fuel pressure in the second fuel chamber 13' increases and when the pressure in the second fuel chamber 13' is high enough, the force caused by the fuel pressure urges the second injector needle 16' toward the open position against the force of the second spring 18'. The second injector needle 16' is lifted from its seat and the fuel is injected through second injection nozzle 14' into the cylinder 2.

To terminate the fuel injection from the first injection valve 4, the control valve 19 is moved to the second position. Flow communication is opened between the first injection valve 4 (first fuel chamber 13) and the drain line 20. Consequently, the fuel pressure in the first fuel chamber 13 decreases and the spring force of the first spring 18 urges the first injector needle 16 to its closed position. Correspondingly, if the switch valve 12 is in the second position and the control valve 19 is moved to the second position, flow communication is opened between the second fuel chamber 13' and the drain line 20. Consequently, the fuel pressure in the second fuel chamber 13' decreases and the spring force of the second spring 18' urges the second injector needle 16' to the closed position. The fuel injection system 1 further comprises a control unit 21 that is configured to operate the switch valve 12 and the control valve 19 as described above.

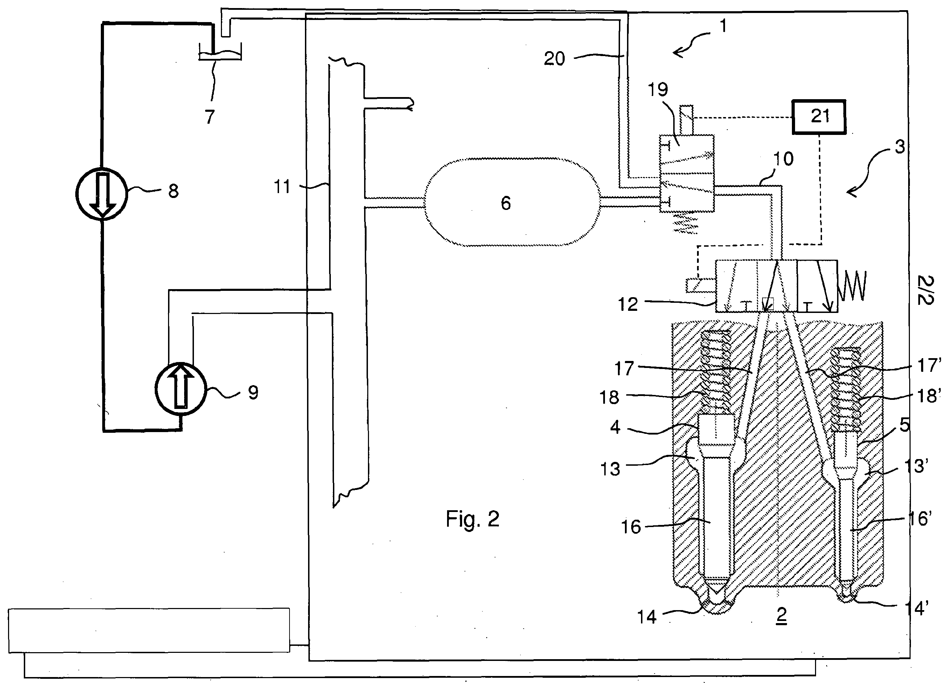

Fig. 2 discloses a fuel injection system 1, in which the switch valve 12 is a 3/3 valve that has three ports and three positions. First and second positions of the switch valve 12 correspond to the first and the second positions of the switch valve shown in fig. 1. Additionally, the switch valve 12 has a third position, where flow communication between the control valve 19 and both fuel injection valves 5, 4 is open. In fig. 2 the switch valve 12 is shown in its third position.

In the third position of the switch valve 12 (and the first position of the control valve 19), fuel flow via the switch valve 12 and both feed lines 17 and 17' into both fuel chambers 13 and 13' is allowed. Fuel pressure in both fuel chambers 13 and 13' increases and when the pressure in the fuel chambers 13 and 13' is high enough, the force caused by the fuel pressure urges both injector needles 16 and 16' toward the open position against the force of the springs 18 and 18'. Both injector needles 16 and 16' are lifted from their seats and the fuel is injected through both injection nozzles 14 and 14' into the cylinder 2.

To terminate the fuel injection from the first and the first and the second fuel injection valves 4, 5, the control valve 19 is moved to the second position. Flow communication is opened from the first fuel injection valve 4 (first fuel chamber 13) to the drain line 20 and from the second fuel injection valve 7 (second fuel chamber 13') to the drain line 20. Consequently, the fuel pressure in the first fuel chamber 13 and the second fuel chamber 13' decreases and the spring forces of the first spring 18 and the second spring 18' urge the first injector needle 16 and second injector needle 16' to the closed positions. In other respects, the fuel injection system of fig. 2 is similar to that of fig. 1.

The third position can be used occasionally to prevent sticking of the injector needles 16, 16'. For instance, when the engine is operated for a long period of time at high load, the switch valve 12 can be switched to the third position for a short period of time to allow fuel injection also through the second fuel injection valve 5. This flushing can take place according to a predetermined schedule. Additionally, the third position of the switch valve 12 can be used at high engine loads to allow fuel injection through both fuel injection valves 4, 5 concurrently.

## Claims

1. A fuel injection system (1) for a reciprocating engine, the fuel injection system (1) comprising:
- a high pressure fuel pump (9),
- a fuel injection unit (3) for each cylinder (2) of the engine, the fuel injection unit (3) comprising a first fuel injection valve (4) and a second fuel injection valve (5) for injecting fuel into the cylinder (2), a pressure accumulator (6) for receiving fuel from the high pressure fuel pump (9), and
- a drain line (20),
**characterized in that** the fuel injection unit (3) is provided with a switch valve (12) and a control valve (19), which are arranged in flow communication with each other,
- said switch valve (12) having a first position, where flow communication between the control valve (19) and the first fuel injection valve (4) is open and flow communication between the control valve (19) and the second fuel injection valve (5) is closed, and a second position, where flow communication between the control valve (19) and the second fuel injection valve (5) is open and flow communication between the control valve (19) and the first fuel injection valve (4) is closed, and
- said control valve (19) having a first position, where flow communication between the pressure accumulator (6) and the switch valve (12) is open and flow communication between the drain line (20) and the switch valve (12) is closed, and a second position, where flow communication between the drain line (20) and the switch valve (12) is open and flow communication between the pressure accumulator (6) and the switch valve (12) is closed.

2. The fuel injection system according to claim 1, **characterized in that** the switch valve (12) has a third position, where flow communication between the control valve (19) and both the first fuel injection valve (4) and the second fuel injection valve (5) is open.

3. The fuel injection system according to claim 1, **characterized in that** fuel injection capacity of the first fuel injection (4) valve is greater than the fuel injection capacity of the second fuel injection valve (5).

4. The fuel injection system according to claim 1, **characterized in that** the first fuel injection valve (4) comprises a first fuel chamber (13) for storing fuel before injection, a first injection nozzle (14) and a first injector needle (16) for opening and closing flow communication between the first fuel chamber (13) and the first injection nozzle (14).

5. The fuel injection system according to claim 4, **characterized in that** the first fuel injection valve (4) comprises a first spring (18), which urges the first injector needle (16) toward a closed position, and force caused by fuel pressure in the first fuel chamber (13) urges the first injector needle (16) toward an open position.

6. The fuel injection system according to claim 1 or 4, **characterized in that** that the second fuel injection valve (5) comprises a second fuel chamber (13') for storing fuel before injection, a second injection nozzle (14') and a second injector needle (16') for opening and closing flow communication between the second fuel chamber (13') and the second injection nozzle (14').

7. The fuel injection system according to claim 6, **characterized in that** the second injection valve (5) comprises a second spring (18'), which urges the second injector needle (16') toward a closed position, and force caused by fuel pressure in the second fuel chamber (13') urges the second injector needle (16') toward an open position.

8. The fuel injection system according to claim 1, **characterized in that** the switch valve (12) is a 3/2 valve having three ports and two positions.

9. The fuel injection system according to claim 1, **characterized in that** the switch valve (12) is a 3/3 valve having three ports and three positions.

10. The fuel injection system according to claim 1, 8 or 9, **characterized in that** the control valve (19) is a 3/2 valve having three ports and two positions.

11. The fuel injection system according to claim 8 or 9, **characterized in that** a first port of the switch valve (12) is in flow communication with the first injection valve (4), a second port with the second injection valve (5) and a third port with the control valve (19).

12. The fuel injection system according to claim 10, **characterized in that** a first port of the control valve (19) is in flow communication with the drain line (20), a second port with the pressure accumulator (6) and a third port with the switch valve (12).

## Patentansprüche

1. Kraftstoff-Einspritzsystem (1) für eine Hubkolbenmaschine, wobei das Kraftstoff-Einspritzsystem (1) Folgendes umfasst:
- eine Hochdruck-Kraftstoffpumpe (9),
- eine Kraftstoff-Einspritzeinheit (3) für jeden Zylinder (2) der Maschine, wobei die Kraftstoff-Einspritzeinheit (3) ein erstes Kraftstoff-Einspritzventil (4) und ein zweites Kraftstoff-Einspritzventil (5) zum Einspritzen von Kraftstoff in den Zylinder (2), einen Drucksammler (6) zum Aufnehmen von Kraftstoff von der Hochdruck-Kraftstoffpumpe (9) umfasst, und
- eine Abzugsleitung (20),
**dadurch gekennzeichnet, dass** die Kraftstoff-Einspritzeinheit (3) mit einem Schaltventil (12) und einem Steuerventil (19), die in Strömungsverbindung miteinander angeordnet sind, versehen ist,
- wobei das Schaltventil (12) eine erste Stellung, wobei die Strömungsverbindung zwischen dem Steuerventil (19) und dem ersten Kraftstoff-Einspritzventil (4) offen ist und die Strömungsverbindung zwischen dem Steuerventil (19) und dem zweiten Kraftstoff-Einspritzventil (5) geschlossen ist, und eine zweite Stellung, wobei die Strömungsverbindung zwischen dem Steuerventil (19) und dem zweiten Kraftstoff-Einspritzventil (5) offen ist und die Strömungsverbindung zwischen dem Steuerventil (19) und dem ersten Kraftstoff-Einspritzventil (4) geschlossen ist, hat und
- wobei das Steuerventil (19) eine erste Stellung, wobei die Strömungsverbindung zwischen dem Drucksammler (6) und dem Schaltventil (12) offen ist und die Strömungsverbindung zwischen der Abzugsleitung (20) und dem Schaltventil (12) geschlossen ist, und eine zweite Stellung, wobei die Strömungsverbindung zwischen der Abzugsleitung (20) und dem Schaltventil (12) offen ist und die Strömungsverbindung zwischen dem Drucksammler (6) und dem Schaltventil (12) geschlossen ist, hat.

2. Kraftstoff-Einspritzsystem nach Anspruch 1, **dadurch gekennzeichnet, dass** das Schaltventil (12) eine dritte Stellung hat, wobei die Strömungsverbindung zwischen dem Steuerventil (19) und sowohl dem ersten Kraftstoff-Einspritzventil (4) als auch dem zweiten Kraftstoff-Einspritzventil (5) offen ist.

3. Kraftstoff-Einspritzsystem nach Anspruch 1, **dadurch gekennzeichnet, dass** die Kraftstoff-Einspritzkapazität des ersten Kraftstoff-Einspritzventils (4) größer ist als die Kraftstoff-Einspritzkapazität des zweiten Kraftstoff-Einspritzventils (5).

4. Kraftstoff-Einspritzsystem nach Anspruch 1, **dadurch gekennzeichnet, dass** das erste Kraftstoff-Einspritzventil (4) eine erste Kraftstoffkammer (13) zum Speichern von Kraftstoff vor der Einspritzung, eine erste Einspritzdüse (14) und eine erste Einspritznadel (16) zum Öffnen und Schließen der Strömungsverbindung zwischen der ersten Kraftstoffkammer (13) und der ersten Einspritzdüse (14) umfasst.

5. Kraftstoff-Einspritzsystem nach Anspruch 4, **dadurch gekennzeichnet, dass** das erste Kraftstoff-Einspritzventil (4) eine erste Feder (18), welche die erste Einspritznadel (16) zu einer geschlossenen Stellung hin drängt, umfasst und eine durch den Kraftstoffdruck in der ersten Kraftstoffkammer (13) erzeugte Kraft die erste Einspritznadel (16) zu einer offenen Stellung hin drängt.

6. Kraftstoff-Einspritzsystem nach Anspruch 1 oder 4, **dadurch gekennzeichnet, dass** das zweite Kraftstoff-Einspritzventil (5) eine zweite Kraftstoffkammer (13') zum Speichern von Kraftstoff vor der Einspritzung, eine zweite Einspritzdüse (14') und eine zweite Einspritznadel (16') zum Öffnen und Schließen der Strömungsverbindung zwischen der zweiten Kraftstoffkammer (13') und der zweiten Einspritzdüse (14') umfasst.

7. Kraftstoff-Einspritzsystem nach Anspruch 6, **dadurch gekennzeichnet, dass** das zweite Kraftstoff-Einspritzventil (5) eine zweite Feder (18'), welche die zweite Einspritznadel (16') zu einer geschlossenen Stellung hin drängt, umfasst und eine durch den Kraftstoffdruck in der zweiten Kraftstoffkammer (13') erzeugte Kraft die zweite Einspritznadel (16') zu einer offenen Stellung hin drängt.

8. Kraftstoff-Einspritzsystem nach Anspruch 1, **dadurch gekennzeichnet, dass** das Schaltventil (12) ein 3/2-Ventil ist, das drei Öffnungen und zwei Stellungen hat.

9. Kraftstoff-Einspritzsystem nach Anspruch 1, **dadurch gekennzeichnet, dass** das Schaltventil (12) ein 3/3-Ventil ist, das drei Öffnungen und drei Stellungen hat.

10. Kraftstoff-Einspritzsystem nach Anspruch 1, 8 oder 9, **dadurch gekennzeichnet, dass** das Steuerventil (19) ein 3/2-Ventil ist, das drei Öffnungen und zwei Stellungen hat.

11. Kraftstoff-Einspritzsystem nach Anspruch 8 oder 9, **dadurch gekennzeichnet, dass** eine erste Öffnung des Schaltventils (12) mit dem ersten Kraftstoff-Einspritzventil (4), eine zweite Öffnung mit dem zweiten Kraftstoff-Einspritzventil (5) und eine dritte Öffnung mit dem Steuerventil (19) in Strömungsverbindung steht.

12. Kraftstoff-Einspritzsystem nach Anspruch 10, **dadurch gekennzeichnet, dass** eine erste Öffnung des Steuerventils (19) mit der Abzugsleitung (20), eine zweite Öffnung mit dem Drucksammler (6) und eine dritte Öffnung mit dem Schaltventil (12) in Strömungsverbindung steht.

## Revendications

1. Système d'injection de carburant (1) pour un moteur alternatif, le système d'injection de carburant (1) comprenant :
- une pompe à carburant à haute pression (9),
- une unité d'injection de carburant (3) pour chaque cylindre (2) du moteur, l'unité d'injection de carburant (3) comprenant une première soupape d'injection de carburant (4) et une deuxième soupape d'injection de carburant (5) pour injecter du carburant dans le cylindre (2), un accumulateur de pression (6) pour recevoir du carburant provenant de la pompe à carburant à haute pression (9), et
- une conduite de vidange (20),
**caractérisé en ce que** l'unité d'injection de carburant (3) est dotée d'une soupape de commutation (12) et d'une soupape de régulation (19) qui sont disposées en communication d'écoulement l'une avec l'autre,
- ladite soupape de commutation (12) ayant une première position où une communication d'écoulement entre la soupape de régulation (19) et la première soupape d'injection de carburant (4) est ouverte et où une communication d'écoulement entre la soupape de régulation (19) et la deuxième soupape d'injection de carburant (5) est fermée, et une deuxième position où une communication d'écoulement entre la soupape de régulation (19) et la deuxième soupape d'injection de carburant (5) est ouverte et où une communication d'écoulement entre la soupape de régulation (19) et la première soupape d'injection de carburant (4) est fermée, et
- ladite soupape de régulation (19) ayant une première position où la communication d'écoulement entre l'accumulateur de pression (6) et la soupape de commutation (12) est ouverte et où une communication d'écoulement entre la conduite de vidange (20) et la soupape de commutation (12) est fermée, et une deuxième position où la communication d'écoulement entre la conduite d'écoulement (20) et la soupape de commutation (12) est ouverte et où une communication d'écoulement entre l'accumulateur de pression (6) et la soupape de commutation (12) est fermée.

2. Système d'injection de carburant selon la revendication 1, **caractérisé en ce que** la soupape de commutation (12) a une troisième position où la communication d'écoulement entre la soupape de régulation (19) et la première soupape d'injection de carburant (4) tout comme la deuxième soupape d'injection de carburant (5) est ouverte.

3. Système d'injection de carburant selon la revendication 1, **caractérisé en ce que** la capacité d'injection de carburant de la première soupape d'injection de carburant (4) est supérieure à la capacité d'injection de carburant de la deuxième soupape d'injection de carburant (5).

4. Système d'injection de carburant selon la revendication 1, **caractérisé en ce que** la première soupape d'injection de carburant (4) comprend une première chambre de carburant (13) pour stocker du carburant avant l'injection, une première buse d'injection (14) et une première aiguille d'injecteur (16) pour ouvrir et fermer une communication d'écoulement entre la première chambre de carburant (13) et la première buse d'injection (14).

5. Système d'injection de carburant selon la revendication 4, **caractérisé en ce que** la première soupape d'injection de carburant (4) comprend un premier ressort (18) qui pousse la première aiguille d'injecteur (16) vers une position fermée, et la force produite par la pression de carburant dans la première chambre de carburant (13) poussant la première aiguille d'injecteur (16) vers une position ouverte.

6. Système d'injection de carburant selon la revendication 1 ou 4, **caractérisé en ce que** la deuxième soupape d'injection de carburant (5) comprend une deuxième chambre de carburant (13') pour stocker du carburant avant l'injection, une deuxième buse d'injection (14') et une deuxième aiguille d'injecteur (16') pour ouvrir et fermer une communication d'écoulement entre la deuxième chambre de carburant (13') et la deuxième buse d'injection (14').

7. Système d'injection de carburant selon la revendication 6, **caractérisé en ce que** la deuxième soupape d'injection (5) comprend un deuxième ressort (18') qui pousse la deuxième aiguille d'injecteur (16') vers une position fermée, et la force produite par la pression de carburant dans la deuxième chambre de carburant (13') poussant la deuxième aiguille d'injecteur (16') vers une position ouverte.

8. Système d'injection de carburant selon la revendication 1, **caractérisé en ce que** la soupape de commutation (12) est une soupape 3/2 ayant trois orifices et deux positions.

9. Système d'injection de carburant selon la revendication 1, **caractérisé en ce que** la soupape de commutation (12) est une soupape 3/3 ayant trois orifices et trois positions.

10. Système d'injection de carburant selon la revendication 1, 8 ou 9, **caractérisé en ce que** la soupape de régulation (19) est une soupape 3/2 ayant trois orifices et deux positions.

11. Système d'injection de carburant selon la revendication 8 ou 9, **caractérisé en ce qu'**un premier orifice de la soupape de commutation (12) est en communication d'écoulement avec la première soupape d'injection (4), un deuxième orifice avec la deuxième soupape d'injection (5), et un troisième orifice avec la soupape de régulation (19).

12. Système d'injection de carburant selon la revendication 10, **caractérisé en ce qu'**un premier orifice de la soupape de régulation (19) est en communication d'écoulement avec la conduite d'écoulement (20), un deuxième orifice avec l'accumulateur de pression (6), et un troisième orifice avec la soupape de commutation (12).
